# EUROPEAN PATENT SPECIFICATION

(11) **EP 1 399 355 B1**
(45) Date of publication and mention of the grant of the patent: **10.04.2013**
(21) Application number: 02742846.5
(22) Date of filing: 30.05.2002
(51) Int. Cl.: B62J 6/00, B62K 21/12

(54) **CONTROL UNIT**
STEUEREINHEIT
ELEMENT DE COMMANDE

(30) Priority: 30.05.2001 DK 200100855; 12.12.2001 DK 200101858
(43) Date of publication of application: 24.03.2004
(73) Proprietor: Secto Design & Innovation, 6710 Esbjerg V (DK)
(72) Inventor: JORGENSEN, Kenneth, DK-6710 Esbjerg V (DK)
(86) International application number: PCT/DK2002/000371
(87) International publication number: WO 2002/096745

(56) References cited:
- WO-A-98/06975
- CA-A- 2 229 093
- DE-A- 19 842 841
- DE-U- 20 113 544
- US-A- 5 008 782
- US-A- 5 247 431

## Description

The present invention concerns a steering member for an open vehicle, which includes at least one steering wheel with connection to the steering member, and where the steering member includes at least one handle and at least one integrated light source for making the open vehicle visible.

US 5,008,782 discloses bicycle handlebars with a number of lamps integrated in the handlebars, where the lamps are connected in parallel and powered from an external power supply through cables passed through the material of the handlebars. The handlebars may be made of transparent material which the lamp light can penetrate. In order to obtain sufficient strength, the handlebars may include mechanical reinforcement.

This invention is unsuitable in that an external power supply is to be used. This power supply will be exposed to both vandalism and theft if the power supply is left on a bicycle when it is parked. If incandescent lamps are used, the energy consumption becomes very great, and frequent battery shifts will be necessary.

US 4,319,307 discloses handlebars with integrated light, where external handlebars contains an internal light source in the shape of a fluorescent tube. The external handlebars are designed with apertures through which light can penetrate for shining forwards and simultaneously illuminating the cyclist. Supply of power is provided with cables connected to an external source.

The use of fluorescent tubes is disadvantageous in that the tubes demand AC current at a relatively high voltage in order to be lit. Therefore, a converter is to be used between batteries and fluorescent tube. No converter can operate without loss, why the total energy consumption is very great, and only a small part of the light produced is utilised. Also, a fluorescent tube will be very easily damaged if the bicycle e.g. overturns while parked. The longitudinal slots of the handlebars may reduce the mechanical strength of the handlebars, so that risk of material breakage during operation is present.

US 5247431 describes an indicating device disposed in the end portion of the handlebar of a bicycle for indicating the turning of the bicycle, the device includes a barrel engaged in the handlebar, a light bulb disposed in the outer end of the barrel, a battery disposed in the barrel for energizing the light bulb, and a switch connected between the light bulb and the battery for controlling the energizing of the light bulb.

It is the object of the invention to provide a steering member, which contains an efficient and reliable light source for an open vehicle, where theft, vandalism and weather do not have any influence on the function of the light source.

The object may be reached by the light source being formed by at least one forwardly shining light-emitting diode, where the light-emitting diode is disposed in an aperture in the steering member, where the steering member may contain at least one power source for supplying the light-emitting diode, and where the steering member also contains means for switching at least one light-emitting diode on and off.

Hereby may be achieved that the light source with associated supply circuit may be disposed inside the steering member, where the individual elements are protected against most external influences, including penetration of water. For the user of the vehicle, the light source will always be carried and functioning. Therefore, the built-in light source will be used to a far greater extent than prior art light sources, and thereby increase the traffic safety for the user.

The steering member may advantageously contain at least one group of light-emitting diodes, where each group may consist of at least one light-emitting diode. Hereby, a higher light intensity can be attained, and the different light-emitting diodes can radiate light in different directions and thereby ensure that an open vehicle can be visible from a wide angle.

Advantageously, different light-emitting diodes can have different spreading of light, where a first type of light-emitting diodes spreads light in a wide angle, whereas a second type of light-emitting diodes concentrate emitted light in a more narrow angle. Hereby, a concentrated illumination can be achieved directly in the direction of driving, whereas the vehicle becomes visible from a wide angel due to light-emitting diodes with large spreading angle.

The light-emitting diodes can advantageously radiate light pulsatingly with an invisible flash frequency. Hereby, the power consumption of the light-emitting diodes can be reduced without substantial reduction of light intensity. Service life of batteries may thereby be increased considerably.

If light-emitting diodes flash with a visible flash frequency, it may be achieved that the light-emitting diodes become visible over greater distances, and maybe from a wider angle of view. At the same time, the power consumption is reduced, and battery life is prolonged.

Light-emitting diodes may be mounted on printed circuit boards, where the printed circuit boards can include means of electric control of current and voltage for supplying light-emitting diodes. Printed circuit boards may hereby form a mechanical and electric fastening simultaneously with printed circuit boards containing a number of electric components needed for energy optimised adjustment of current and voltage for the light-emitting diodes.

The invention can be made with a power source consisting of high energy batteries. Use of a completely new battery types may imply that battery lifetime becomes so high that change of batteries will not be necessary for many users throughout the entire lifetime of the open vehicle.

As alternative, the power source can consist of environment friendly, rechargeable batteries, where the batteries can be recharged by being connected to an external power supply. An almost unlimited lifetime for the light source of the steering member may hereby be attained, and recharging will only be necessary few times a year.

The steering member may include a solar panel mounted at the upper side of the steering member, where the solar panel is connected with the rechargeable batteries through an electric control circuit. Hereby may be achieved that batteries will be constantly charged if the vehicle, either during operation or during standstill, is provided the opportunity of irradiation by daylight. Optimal recharging will naturally be achieved in direct sun, where a total recharging may be achieved after few hours, but even inside a room with modest lighting, solar cells may contribute with sufficient power for daily operation of the light source for a shorter period of time. With a well dimensioned rechargeable battery capacity, energy can be stored from summer to winter. The use of solar cells can be combined with recharging from external energy source, whereby the reliability becomes optimal.

As alternative, the rechargeable batteries of the steering member can be supplied from an electric generator which can be driven by the movement of the vehicle. Hereby, recharging is ensured every time the vehicle is used, and if the light source of the steering member is switched on, the energy supply may completely or partly come from the electric generator, whereby the requirement to the rechargeable batteries is reduced. Complete omission of batteries will be unfavourable, since in that case the light source would turn off as soon as the vehicle stands still.

The electric generator and its electric connections can be integrated in the vehicle. External wires, which are often cause of functional failure, may hereby be completely avoided. On a bicycle, the generator may be built into the front wheel hub, and electric wires may run inside a front fork of a bicycle.

The steering member can include means for automatic switching on and off of the light source, where an electronic logic circuit, on condition of detected wheel movement and measurement of light intensity, switches on at least one light-emitting diode, and where the logic circuit, on the condition of missing wheel movement, after a time delay switches off at least one light-emitting diode. Hereby can be achieved that the light source will be lit every time there is need for light, and the light source will switch off automatically when the vehicle is parked.

If the vehicle is equipped with an electric generator, wheel movement can be detected by determining energy production from the electric generator.

In an alternative embodiment, the steering member includes a display for showing the operating data of the vehicle, where the display is supplied with energy from the energy supply of the steering member, where the display is provided with data from the electronic unit of the printed circuit board, which, on the basis of electric signals from an energy producing unit emitting signal synchronously with the wheel movement of the vehicle, calculates the speed data of the vehicle, which are shown on the display, where the display shifts between different data by actuating a switch. Hereby, existing components, such as wheel movement detector or generator, may be utilised for supplying a bicycle computer which may be powered from the existing energy source of the control means. Besides displaying known bicycle computer data, the display can be used for showing e.g. battery charge.

The steering member may contain at least two light-emitting diode groups, where individual light-emitting diode groups are powered form their own energy supply, where light-emitting diodes and energy supply are mounted from the ends of the steering member. Hereby may be achieved optimal reliability as functional failure for both units at the same time is very improbable. Mounting from the ends may imply that changing the batteries can be effected by dismounting an end plug connected to the batteries.

The steering member may contain at least one end plug with connection to the batteries, where the end plugs contain at least one light-emitting diode that emits light in direction deviating at least 90° from the direction of driving of the vehicle. A position light directed towards the side, or directed rearwards where the diode colour can be red, may hereby be achieved. An active light source being visible from the side may increase traffic safety for e.g. cyclists.

The end plugs of the steering member may contain at least one forwardly shining light-emitting diode. The real width of a vehicle may thereby be visible for an oncoming vehicle. The traffic safety for cyclists will be increased hereby.

The steering member may be designed with asymmetric light where at least one of the light-emitting diodes of the steering member disposed close to a roadside illuminates relatively far ahead, whereas at least one light-emitting diode close to an opposite direction of driving illuminates a relatively shorter distance ahead of the vehicle. The total cone of light hereby becomes asymmetrical, and the roadside may be illuminated in the driving direction without blinding oncoming traffic.

Definitions:
By an open vehicle is understood in particular bicycles with at least one wheel, where bicycles may be with or without auxiliary motor. Scooters, wheel chairs and walking aids are also included.

By steering member is understood handlebars on a bicycle, walking aid, moped or scooter.

By light-emitting diode is understood each single component, which include one or more individually radiating light-emitting diodes, which can be built together on a common base plate with a common cover. The term light-emitting diode thus also comprises a "light chip".

The invention will be explained below from drawings, where:
- Fig. 1: show a possible embodiment of a steering member, and
- Fig. 2: shows an exploded view through a part of a possible embodiment of the invention.

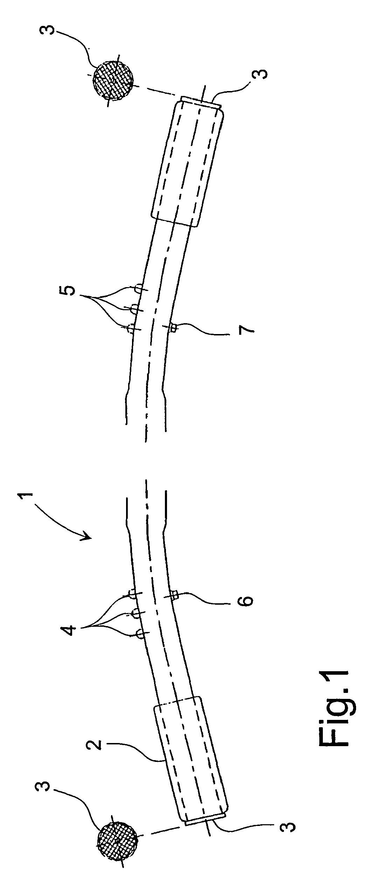

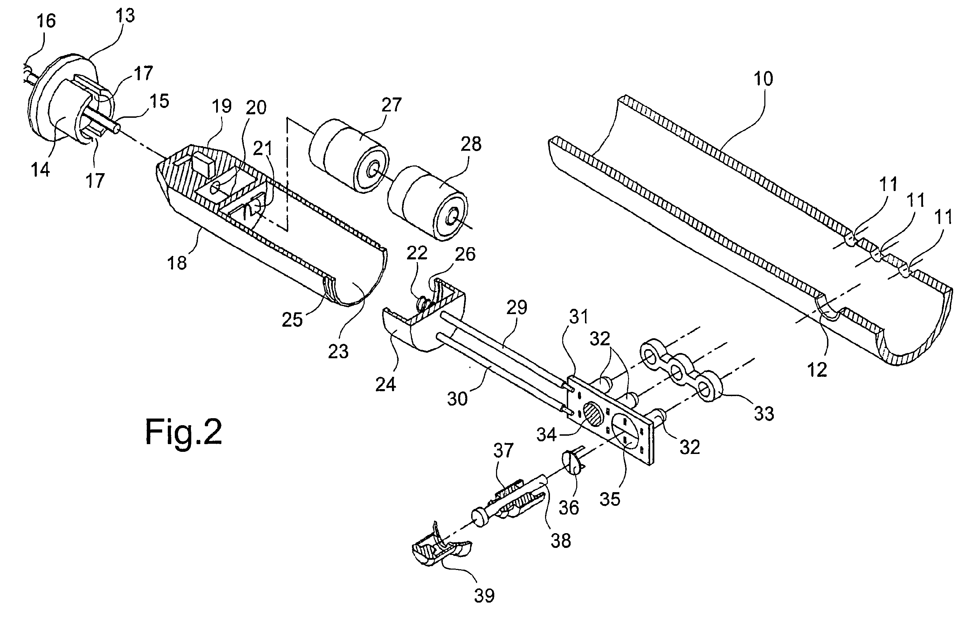

Fig. 1 shows a steering member 1 with handles 2, where the handles contain end plugs 3. The steering member 1 contains a first light-emitting diode group 4 consisting of three light-emitting diodes which can be activated with switch means 6. In the steering member 1 there is also shown a second light-emitting diode group 5, which can be activated by a switch means 7. The steering member contains at least one power source 27, 28 (Fig. 2) for supplying the light-emitting diodes.

With light diode groups 4, 5 mounted in the steering member, a permanent light is achieved on an open vehicle, e.g. a bicycle. A light diode group 4, 5 is switched on and off by activating one of the switch means 6, 7. The two light diode groups 4, 5 may be provided in the steering member with a small vertical angular deviation for achieving asymmetrical light on the area ahead. Also, the individual light-emitting diode in the light-emitting diode groups 4, 5 may be designed with different spreading angle, whereby individual light-emitting diodes become visible in a very wide angle ahead, whereas other light-emitting diodes concentrate light in a narrow angle and thereby become visible over relatively longer distance.

Fig. 2 shows an exploded view of a possible embodiment of the steering member, of which a detail of a sectioned steering member 10 is shown, where the steering member has apertures 11 for accommodating light-emitting diodes 32, where the steering member has a second aperture 12 for receiving a switch guide 37, and a switch member 38. The steering member 10 is terminated with an end plug 13 which may contain a cylindrical section 14 interacting with the internal surface of the steering member 10. The cylindrical section 14 is designed with slots 17. The end plug 13 may also contain a screw 15 with an external head 16. By means of the screw 15, the end plug 13 is connected with a battery holder 18 having a conical end 19, which interact with slots 17 formed in the cylindrical section 14. The battery holder also contains a hole 20 with an internal thread, which can interact with the bolt 15 of the end plug 13. The battery holder 18 has a first electric terminal 21 mounted in the battery magazine 23 of the battery holder. A second electric terminal is shaped as a helical spring 22, which is fastened to a cover 24 having a thread 26, which interacts with a thread 25 on the battery holder 18. The battery holder 18 may contain batteries 27, 28. Electric conductors 29, 30 from the battery holder cover 24 form connections to a printed circuit board 31 on which light-emitting diodes 32 are fastened. The light diodes 32 are provided in a spacer 33, where the points of the light-emitting diodes interact with holes 11 in the steering member 10. The printed circuit board 31 also contains an electronic unit 34 which performs regulation of current and voltage to the light-emitting diodes. The printed circuit board 31 also contains a contact surface 35 interacting with a switch 36, which interacts with a switch member 38 mounted in a guide 37. The switch member 38 is activated with a flexible cover 39.

As shown on Fig. 2, by the invention it is possible to completely integrate a light source 32 and its required accessories internally in a steering member 10. The battery holder 18 is fastened to the end plug 13 because the cone 19 of the battery holder interacts with the cylindrical section 14 of the end plug 13 which is assembled with the battery holder 18 by means of the bolt 15, distending the cylindrical section 14 so that it is forced out against the inner surface of the steering member 10. The batteries are thereby held fixed in relation to the steering member. The cover 24 may be fastened to the inner surface of the steering member by either bonding or welding, where the battery holder can be screwed tight with its thread 25 interacting with the thread 26 of the cover. The printed circuit board 31 may be secured together with the light-emitting diodes 32 by gluing, where the light-emitting diodes 32 are glued in the apertures 11.

## Claims

1. A steering member for an open vehicle, which includes at least one steering wheel with connection to the steering member, and where the steering member includes at least one handle, where the steering member contains integrated light sources for making the open vehicle visible, **characterised in that** said light sources are formed by forwardly radiating light-emitting diodes (4, 5, 32), which steering member (1,10) comprises apertures (11) for accommodating light-emitting diodes (32), which steering member further comprises a printed circuit board (31), on which printed board light-emitting diodes (32) are fastened, which light-emitting diodes interact with the apertures (11) in the steering member (10), which printed circuit board (31) contains an electronic unit (34), which electronic unit performs regulation of current and voltage to the light-emitting diodes, which steering member (1, 10) contains at least one power source (27,28) for supplying the light-emitting diode (4, 5, 32), which printed circuit board (31) also contains a switch device (35, 36) for switching on and of the light-emitting diodes (4, 5, 32), which steering member comprises second apertures (12) for receiving a switch member (38), which switch member (38) interacts with the switch device (35, 36) placed at the printed circuit board (31).

2. A steering member according to claim 1, **characterised in that** the steering member (1) contains at least two groups (4, 5) of light-emitting diodes (32), where each group consists of at least two light-emitting diodes (32).

3. A steering member according to claim 1 or 2, **characterised in that** different light-emitting diodes (32) have different spreading of light, where a first type of light-emitting diodes (32) spreads light in a wide angle, whereas a second type of light-emitting diodes (32) concentrate emitted light in a narrow angle.

4. A steering member according to any of claims 1 - 3, **characterised in that** the light emitting diodes (32) flashes in a pulsating way with an invisible flash frequency.

5. A steering member according to any of claims 1 - 4, **characterised in that** light-emitting diodes (32) flash with a visible flash frequency.

6. A steering member according to any of claims 1 - 5, **characterised in that** the power source consists of high-energy batteries (27, 28).

7. A steering member according to any of claims 1 - 5, **characterised in that** the power source consists of environment friendly, rechargeable batteries (27, 28), where the batteries are recharged by being connected to an external source of supply.

8. A steering member according to claim 7, **characterised in that** the steering member (1, 10) contains a solar panel mounted at the upper side of the steering member, where the solar panel is connected to the rechargeable batteries through an electric control circuit (34).

9. A steering member according to claim 7 or 8, **characterised in that** the rechargeable batteries (27, 28) of the steering member (1, 10) are supplied from an electric generator driven by the movement of the vehicle.

10. A steering member according to any of claims 7 - 9, **characterised in that** the electric generator and its electric connections are integrated in the vehicle.

11. A steering member according to claims 1 - 10, **characterised in that** the steering member (1,10) contains means for automatic switching on and off, where an electronic logic circuit (34), on condition of detected wheel movement and measurement of light intensity, switches on at least one light-emitting diode (32), and where the logic circuit (34), on the condition of missing wheel movement, after a time delay switches off at least one light-emitting diode (32).

12. A steering member according to claim 11, **characterised in that** wheel movement is detected by determining power output from the electric generator.

13. A steering member according to any of claims 1 - 12, **characterised in that** the steering member includes a display for showing the operating data of the vehicle, where the display is supplied with energy from the energy supply (27, 28) of the steering member, where the display is provided with data from the electronic unit (34) of the printed circuit board, which, on the basis of electric signals from an energy producing unit emitting signal synchronously with the wheel movement of the vehicle, calculates the speed data of the vehicle, which are shown on the display, where the display shifts between different data by actuating a switch.

14. A steering member according to one of claims 1 - 13, **characterised in that** the steering member contains at least two light-emitting diode groups (4, 5), where individual light-emitting diode groups (4, 5) are powered from their own energy supply (27, 28), and where light-emitting diode groups (4, 5) and energy supply (27, 28) are mounted from the ends of the steering member.

15. A steering member according to any of claims 1 - 14, **characterised in that** the steering member (1,10) contains at least one end plug (13) with connection to the batteries (27,28), where the end plugs (13) contain at least one light-emitting diode that emits light in direction deviating at least 90° from the direction of driving of the vehicle.

16. A steering member according to any of claims 1 - 15, **characterised in that** the end plugs (13) contain at least one forwardly shining light-emitting diode.

17. A steering member according to any of claims 1 - 16, **characterised in that** the steering member (1, 10) is made with an asymmetric light where at least one of the light-emitting diodes (32) of the steering member disposed close to a roadside illuminates relatively far ahead, whereas at least one light-emitting diode (32) close to an opposite direction of driving illuminates a relatively shorter distance ahead of the vehicle.

## Patentansprüche

1. Steuerbauelement für ein offenes Fahrzeug, das zu mindest ein mit einem Steuerbauelement verbundenes Steuerrad enthält, wobei das Steuerbauelement zumindest einen Handgriff umfasst, und wobei das Steuerelement mit dem Steuerelement integrierten Lichtquellen umfasst, um das offene Fahrzeug wahrnehmbar zu machen, **dadurch gekennzeichnet, dass** die genannten Lichtquellen durch vorwärtz strahlende lichtemittierenden Dioden (4, 5, 32) ausgeformt sind, wobei das Steuerbauelement (1, 10) für die Aufnahme von lichtemittierenden Dioden (32) Öff-nungen (11) aufweist, und wobei das Steuerbaulement weiterhin eine Leiterplatine (31) umfasst, auf welcher Leiterplatine lichtemittierende Dioden (32) befestigt sind, welche lichtemittierende Dioden mit den Öffnungen (11) im Steuerbauelement (10) zusammenwirken, und wobei die Leiterplatine (31) eine Elektronik enthaltende Einheit (34) umfasst, welche Elektronik enthaltende Einheit die Regelung von Strohm und Spannung an die lichtemittierenden Dioden auswirkt, und wobei das Steuerbau-element (1, 10) zumindest eine Energiequelle (27, 28) für die Energieversorgung der lichtemittierenden Dioden (4, 5, 32) enthält, und wobei die Leiterplatine (31) auch eine Schaltungsanordnung (35, 36) für die Ein- und Ausschaltung der lichtemittierenden Dioden (4, 5, 32) enthält, und wobei das Steuerbauelement (38) weitere Öffnungen (12) für die Aufnahme eines Schalterbauelements (38) umfasst, welches Schalterbauelement (38) mit der auf der Leiterplatine (31) angeordneten Schaltungsanordnung (35, 36) zusammenwirkt.

2. Steuerbauelement nach Anspruch 1, **dadurch gekennzeichnet, dass** das Steuerbau-element (1) zumindest zwei Gruppen (4, 5) von lichtemittierenden Dioden (32) enthält, wobei jede Gruppe zumindest zwei lichtemittierenden Dioden (32) umfasst.

3. Steuerbauelement nach Anspruch 1 oder 2, **dadurch gekennzeichnet, dass** verschiedene lichtemittierende Dioden (32) verschiedene Verbreitung des Ausstrahlungsbereichs des Lichts aufweist, wobei ein erster Typ von lichtemittierenden Dioden (32) durch einem breiten Ausstrahlungswinkelbereich das Licht ausstrahlt, wogegen ein zweiter Typ von lichtemittierenden Dioden (32) durch einem schmalen Ausstrahlungswinkelbereich das Licht ausstrahlt.

4. Steuerbauelement nach Anspruch 1, 2 oder 3, **dadurch gekennzeichnet, dass** die lichtemittierenden Dioden (32) mit einer unsichtbaren Frequenz pulsartig aufleuchten.

5. Steuerbauelement nach Anspruch 1, 2, 3 oder 4, **dadurch gekennzeichnet, dass** die lichtemittierenden Dioden (32) mit einer sichtbaren Frequenz aufleuchten.

6. Steuerbauelement nach Anspruch 1, 2, 3, 4 oder 5, **dadurch gekennzeichnet, dass** die Energiequelle aus Hochleistungs-Batterien (27, 28) besteht.

7. Steuerbauelement nach Anspruch 1, 2, 3, 4, oder 5, **dadurch gekennzeichnet, dass** die Energiequelle aus umweltfreundliche, wiederaufladbaren Batterien (27, 28) besteht, wobei die Batterien durch Verbindung an einer externen Energiequelle wiederaufgeladen werden.

8. Steuerbauelement nach Anspruch 7, **dadurch gekennzeichnet, dass** das Steuerbauelement (1, 10) einen an der Oberseite des Steuerbauelements montierten Solarzellenpanel umfasst, wobei der Solarzellenpanel durch einen elektronischen Steuerkreislauf (34) mit den wiederaufladbaren Batterien verbunden ist.

9. Steuerbauelement nach Anspruch 7 oder 8, **dadurch gekennzeichnet, dass** die wiederaufladbaren Batterien (27, 28) des Steuerbauelements (1, 10) von einem durch die Bewegung des Fahrzeugs getriebenen Elektrogenerator mit Energie versehen sind.

10. Steuerbauelement nach Anspruch 7, 8 oder 9, **dadurch gekennzeichnet, dass** der Elektrogenerator und die dazugehörenden Anschlüsse im Fahrzeug mitintegriert sind.

11. Steuerbauelement nach der Ansprüche 1 bis 10, **dadurch gekennzeichnet, dass** das Steuerbauelement (1, 10) Mittel für eine automatisierte Ein- und Ausschaltung umfasst, wobei ein logischer elektronische Kreislauf (34) bei detektierung von Radbewegung sowie Messung der Intensität des Lichts zumindest eine lichtemittierende Diode (32) einschaltet, und wobei der logische Kreislauf (34) bei Detektierung von fehlender Radbewegung sowie einschliesslich einer Zeitverzögerung zumindest eine lichtemittierende Diode (32) abschaltet.

12. Steuerbauelement nach Anspruch 11, **dadurch gekennzeichnet, dass** die Radbewegung durch Detektierung von Energieabgabe vom Elektrogenerator detektiert wird.

13. Steuerbauelement nach irgend einer der Ansprüche 1 bis 12 **dadurch gekennzeichnet, dass** das Steuerbauelement einer Anzeige der Arbeitsdaten des Fahrzeugs einschliesst, wobei die Anzeige aus der Energiequelle (27, 28) des Steuerbauelements mit Energie versehen wird, wobei die Anzeige vom elektronischen Kreislauf (34) der Leiterplatine mit Daten versehen wird, und welcher Kreislauf auf Basis elektrischer Signale aus einer Energie produzierenden Einheit, die Signale in Synchronismus mit den Bewegungen des Fahrzeugs abgibt, die Geschwindigkeitsdaten des Fahrzeugs berechnet, welche Geschwindigkeitsdaten durch die Anzeige gezeigt werden, und wobei durch Betätigung eines Schalters die Anzeige zwischen Anzeigen verschiedener Daten umgeschaltet werden kann.

14. Steuerbauelement nach irgend einer der Ansprüche 1 bis 13, **dadurch gekennzeichnet, dass** das Steuerbauelement zumindest zwei Gruppen (4, 5) von lichtemittierenden Dioden enthält, wobei individuell die Gruppen (4, 5) der lichtemittierenden Dioden aus je seine eigene Energiequelle (27, 28) mit Energie versorgt werden, und wobei die Gruppen (4, 5) der lichtemittierenden Dioden und die Energiequellen (27, 28) von den Enden herein ins Steuerbauelement einmontiert sind.

15. Steuerbauelement nach irgend einer der Ansprüche 1 bis 14, **dadurch gekennzeichnet, dass** das Steuerbauelement (1, 10) zumindest ein Endabschlusselement (13) mit Verbindung an die Batterien (27, 28) enthält, wobei die End-abschlusselemente (13) zumindest eine lichtemittierende Diode enthalten, welches Licht in einer Richtung, die zumindest 90° von der Fahrrichtung des Fahrzeugs abweichend ist, ausgestrahlt wird.

16. Steuerbauelement nach irgend einer der Ansprüche 1 bis 15, **dadurch gekennzeichnet, dass** die Endabschlusselemente (13) zumindest eine nach vorwärtz strahlende lichtemittierende Diode umfassen.

17. Steuerbauelement nach irgend einer der Ansprüche 1 bis 16, **dadurch gekennzeichnet, dass** das Steuerbauelement (1, 10) mit einem asymmetrisch ausstrahlenden Licht hergestellt und mit zumindest eine der lichtemittierenden Dioden (32) des Steuerbauelements dicht an einer Seite der Strasse, sowie weit nach vorne ausstrahlend, angeordnet ist, wogegen zumindest eine lichtemittierende Diode (32) dicht an die gegensätzliche Seite der Fahrrichtung montiert ist und verhältnissmässig kürzer nach vorne vom Fahrzeug aus Licht ausstrahlt.

## Revendications

1. Élément de guidon pour un véhicule ouvert comprenant au moins une roue de direction étant connecté à l'élément de guidon, et l'élément de guidon comprenant au moins une poignée, l'élément de guidon comprenant des sources d'éclairage intégrées pour rendre visible le véhicule ouvert, **caractérisé en ce que** lesdites sources d'éclairage sont formées par des diodes électroluminescentes rayonnant vers l'avant (4, 5, 32), lequel élément de guidon (1, 10) comprend des ouvertures (11) pour recevoir les diodes électroluminescentes (32), lequel élément de guidon comprend encore une carte de circuit imprimée (31), sur laquelle carte imprimée des diodes électroluminescentes (32) sont fixées, lesquelles diodes électroluminescentes interagissent avec les ouvertures (11) dans l'élément de guidon (10), laquelle carte de circuit imprimée (31) comprend une unité électronique (34), laquelle unité électronique effectue une régulation du courant et de la tension aux diodes électroluminescentes, lequel élément de guidon (1, 10) comprend au moins une source de courant (27,28) pour alimenter la diode électroluminescente (4, 5, 32), laquelle carte de circuit imprimée (31) comprend aussi un appareil commutateur (35, 36) pour allumer et éteindre les diodes électroluminescentes (4, 5, 32), lequel élément de guidon comprend des deuxièmes ouvertures (12) pour recevoir un élément de commutation (38), lequel élément de commutation (38) interagit avec l'appareil commutateur (35, 36) situé sur la carte de circuit imprimée (31).

2. Élément de guidon selon la revendication 1, **caractérisé en ce que** l'élément de guidon (1) comprend au moins deux groupes (4, 5) de diodes électroluminescentes (32), chaque groupe comprend au moins deux diodes électroluminescentes (32).

3. Élément de guidon selon la revendication 1 ou 2, **caractérisé en ce que** des différentes diodes électroluminescentes (32) ont une différente diffusion de lumière, un premier type de diodes électroluminescentes (32) diffuse de la lumière grand angle, un deuxième type de diodes électroluminescentes (32) concentre la lumière émise avec un angle étroite.

4. Élément de guidon selon l'une quelconque des revendications 1-3, **caractérisé en ce que** les diodes électroluminescentes (32) clignotent de façon pulsatoire avec une fréquence de clignotement invisible.

5. Élément de guidon selon l'une quelconque des revendications 1-4, **caractérisé en ce que** les diodes électroluminescentes (32) clignotent avec une fréquence de clignotement visible.

6. Élément de guidon selon l'une quelconque des revendications 1-5, **caractérisé en ce que** la source de courant comprend des piles à haute énergie (27, 28).

7. Élément de guidon selon l'une quelconque des revendications 1-5, **caractérisé en ce que** la source de courant comprend des piles rechargeables respectueuses de l'environnement (27, 28), les piles sont rechargées en étant connectées à une source d'approvisionnement externe.

8. Élément de guidon selon la revendication 7, **caractérisé en ce que** l'élément de guidon (1, 10) comprend un panneau solaire monté sur la partie supérieure de l'élément de guidon, le panneau solaire est connecté aux piles rechargeables par un circuit de commande électrique (34).

9. Élément de guidon selon la revendication 7 ou 8, **caractérisé en ce que** les piles rechargeables (27, 28) de l'élément de guidon (1, 10) sont alimentées par un générateur électrique actionné par le déplacement du véhicule.

10. Élément de guidon selon l'une quelconque des revendications 7-9, **caractérisé en ce que** le génerateur électrique et ses raccordements électriques sont intégrés dans le véhicule.

11. Élément de guidon selon les revendications 1-10, **caractérisés en ce que** l'élément de guidon (1,10) comprend des moyens pour allumer et éteindre de façon automatique, à condition d'une détection d'un déplacement de roue et une mesure de l'intensité de lumière, un circuit électronique logique (34) allume au moins une diode électroluminescente (32), et, après un délai de temps et en l'absence d'un déplacement de roue, le circuit logique (34) éteind au moins une diode électroluminescente (32).

12. Élément de guidon selon la revendication 11, **caractérisé en ce que** le déplacement de roue est détecté par la détermination d'une sortie de puissance du générateur électrique.

13. Élément de guidon selon l'une quelconque des revendications 1-12, **caractérisé en ce que** l'élément de guidon comprend un affichage pour afficher les données de fonctionnement du véhicule, l'affichage est alimenté en énergie par l'alimentation énergétique (27, 28) de l'élément de guidon, l'affichage reçoit des données de l'unité électronique (34) de la carte de circuit imprimée, qui, sur la base de signaux électriques provenant d'une unité productrice d'énergie émettant un signal de façon synchrone avec le déplacement de roue du véhicule, calcule les données de vitesse du véhicule affichées sur l'affichage quand l'affichage change entre différentes données en actionnant le commutateur.

14. Élément de guidon selon l'une quelconques des revendications 1-13, **caractérisé en ce que** l'élément de guidon comprend au moins deux groupes de diodes électroluminescentes (4, 5), des différents groupes de diodes électroluminescentes sont alimentés par sa propre alimentation énergétique (27, 28), et des groupes de diodes électroluminescentes (4, 5) et l'alimentation énergétique (27, 28) sont montés à partir des extrémités de l'élément de guidon.

15. Élément de guidon selon l'une quelconques des revendications 1-14, **caractérisé en ce que** l'élément de guidon (1, 10) comprend au moins une prise de courant (13) en contact avec les piles, les prises de courant (13) comprend au moins une diode électroluminescente émettant de la lumière dans un sens s'écartant au moins 90° du sens de déplacement du véhicule.

16. Élément de guidon selon l'une quelconque des revendications 1-15, **caractérisé en ce que** les prises de courant (13) comprennent au moins une diode électroluminescente illuminant vers l'avant.

17. Élément de guidon selon l'une quelconque des revendications 1-16, **caractérisé en ce que** l'élément de guidon (1, 10) est réalisé avec une lumière asymétrique, au moins une des diodes électroluminescentes (32) de l'élément de guidon disposé près d'un accotement illumine relativement très loin, alors qu'au moins une diode électroluminescente (32) à peu près dans le sens inverse du déplacement illumine à une distance relativement plus courte devant le véhicule.
